(19) Europäisches Patentamt / European Patent Office / Office européen des brevets

(11) **EP 2 546 616 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(51) Int Cl.:
**G01L 9/00** (2006.01)   **G01L 19/06** (2006.01)
**G01F 1/32** (2006.01)

(21) Anmeldenummer: **12004433.4**

(22) Anmeldetag: **12.06.2012**

(54) **Vortex-Durchflussmessgerät, Druckaufnehmer für ein Vortex-Durchflussmessgerät und Verfahren zur Herstellung eines solchen Druckaufnehmers**

Vortex flow rate measurement device, pressure transducer for a vortex flow rate measurement device and method for producing such a pressure transducer

Appareil de mesure de débit à vortex, capteur de pression pour appareil de mesure de débit à vortex et procédé de fabrication d'un tel capteur de pression

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2011 DE 102011107547**

(43) Veröffentlichungstag der Anmeldung:
**16.01.2013 Patentblatt 2013/03**

(73) Patentinhaber: **KROHNE Messtechnik GmbH 47058 Duisburg (DE)**

(72) Erfinder:
• **Fernendes, Neville C.
Pune 411001 (IN)**
• **Krisch, Henrik
47809 Krefeld (DE)**
• **Lau, Markus
47058 Duisburg (DE)**
• **Tournillon, Sylvain
47051 Duisburg (DE)**

(74) Vertreter: **Gesthuysen Patent- und Rechtsanwälte
Patentanwälte
Huyssenallee 100
45128 Essen (DE)**

(56) Entgegenhaltungen:
**EP-A2- 0 124 145     DE-A1-102009 039 659
US-A- 4 899 046**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Vortex-Durchflussmessgerät mit einem von einem Medium durchströmbaren Messrohr, einem in dem Messrohr vorgesehenen Staukörper und einem im Wirkbereich des Staukörpers vorgesehenen Druckaufnehmer, wobei der Druckaufnehmer eine auslenkbare Messmembran aufweist, und die Auslenkung der Messmembran messtechnisch zur Detektion des Drucks in dem der Messmembran benachbarten Medium herangezogen wird, wobei zur Erfassung der Auslenkung der Messmembran wenigstens eine optische Faser auf und/oder in der Messmembran angeordnet ist, wobei die optische Faser in ihrem Verlauf auf und/oder in der Messmembran zumindest teilweise mit der Messmembran wirksam verbunden ist, so dass eine durch den Mediumdruck hervorgerufene Auslenkung der Messmembran in dem wirksam verbundenen Bereich zu einer Streckung und/oder Stauchung der optischen Faser führt. Darüber hinaus betrifft die Erfindung auch einen Druckaufnehmer für ein solches Vortex-Durchflussmessgerät und ein Herstellungsverfahren für den Druckaufnehmer.

Vortex-Durchflussmessgeräte sind seit langem bekannt, wobei das Messprinzip auf der Tatsache beruht, dass sich in einem flüssigen oder gasförmigen Medium hinter einem Staukörper, der von dem Medium umströmt wird, eine Wirbelstraße ausbilden kann, die durch sich mit der Strömung fortbewegende, sich vom Staukörper abgelöste Wirbel gebildet ist. Die Frequenz, mit der sich Wirbel von dem Staukörper ablösen, ist von der Strömungsgeschwindigkeit abhängig, wobei dieser Zusammenhang unter gewissen Voraussetzungen nahezu linear ist. Jedenfalls stellt die Messung der Wirbelfrequenz ein geeignetes Mittel zur Bestimmung der Strömungsgeschwindigkeit des Medium dar, weshalb indirekt - unter zusätzlicher Berücksichtigung von beispielsweise Druck und Temperatur - eine Bestimmung des Volumen- und Massedurchflusses durch die Wirbelfrequenzmessung möglich ist. Die in einer Wirbelstraße auftretenden Wirbel des Mediums führen zu lokalen Druckschwankungen, die von Druckaufnehmern detektiert werden können. Ein solcher Druckaufnehmer kann eine im Wesentlichen eben ausgestaltete Messmembran aufweisen und muss so in der Wirbelstraße angeordnet sein, dass die von dem Staukörper erzeugten Wirbel - zumindest mittelbar - an der Messmembran des Druckaufnehmers vorbeiziehen und damit detektierbar sind. Dazu kann der Druckaufnehmer stromabwärts hinter dem Staukörper vorgesehen sein, er kann in dem Staukörper selbst ausgebildet sein oder beispielsweise über dem Staukörper angeordnet sein, wenn der Druckaufnehmer z. B. über Kanäle im Gehäuse des Durchflussmessgeräts die Druckschwanken der Wirbelstraße mittelbar erfasst.

Aus dem Stand der Technik sind ganz unterschiedliche Methoden bekannt, um die Auslenkung der Messmembran des Druckaufnehmers zu erfassen, es werden häufig kapazitive oder induktive Effekte genutzt, teilweise wird auch mit Piezokeramiken gearbeitet. Auch ist aus dem Stand der Technik bekannt, optische Fasern zur Erfassung der Messmembranbewegung einzusetzen, wobei hier beispielsweise Konstruktionen bekannt sind, bei denen die optische Faser praktisch senkrecht vor der Messmembran des Druckaufnehmers steht und stirnseitig die Membran mit Licht beaufschlagt, das von der Messmembran reflektiert und nachfolgend zur Bewegungsdetektion verwendet wird. Aus dem Stand der Technik sind ebenfalls solche Vortex-Durchflussmessgeräte bekannt, bei denen an der Messmembran anliegend eine optische Faser angeordnet ist, wobei die optische Faser mit der Messmembran ausgelenkt wird, wenn diese einem Druck bzw. Differenzdruck ausgesetzt wird, mit dem Ergebnis, dass die optische Faser gestreckt und/oder gestaucht wird, die optische Faser also eine Längenänderung erfährt. Eine solche Längenänderung ist bekanntlich mit hoher Präzision optisch auswertbar, beispielsweise durch an sich bekannte Verfahren, die auf der Interferenz elektromagnetischer Wellen beruhen. Mit diesen Verfahren ist es ohne weiteres möglich, Längenänderungen sicher zu detektieren, die im Bereich der Wellenlänge der verwendeten elektromagnetischen Wellen liegen (z. B. DE 10 2009 039 659 A1).

Aus der Druckschrift EP 0 124 145 A2 ist ein Drucksensor bekannt, mit dessen Membran ein optisches System zur Erfassung der Membranauslenkung mit der Membran gekoppelt ist, wobei die optischen Sende- und Empfangslichtleiter parallel zu der Membran angeordnet sind. Dabei wird das von dem Sendelichtleiter abgestrahlte Licht in Abhängigkeit der Membranauslenkung in zwei Empfangslichtleiter eingekoppelt.

Ein Drucksensor mit einer Membran, deren Auslenkung mittels einer an der Membran anliegenden optischen Faser bestimmt wird, ist aus der Druckschrift US 4,899,046 A bekannt. Dabei wird hinter der Faser die Transmission durch die optische Faser detektiert, wobei die Transmission abhängig von der Verformung der Faser und insofern von der Auslenkung der Membran ist.

Nachteilig bei den aus dem Stande der Technik bekannten Vortex-Durchflussmessgeräten bzw. Druckaufnehmern für Vortex-Durchflussmessgeräte mit mindestens einer auf einer auslenkbaren Messmembran angeordneten optischen Faser ist, dass die optische Faser und auch die Messmembran unmittelbar dem Medium ausgesetzt sind, so dass die optische Faser bei chemisch aggressiven Medien einer Korrosion ausgesetzt ist bzw. bei Anordnung des Druckaufnehmers im Messrohr und damit im strömenden Medium auch eine mechanische Beanspruchung der empfindlichen optischen Faser und/oder der Messmembran droht.

Es ist daher Aufgabe der vorliegenden Erfindung, ein Vortex-Durchflussmessgerät der vorgenannten Art und einen Druckaufnehmer für ein solches Vortex-Durchflussmessgerät anzugeben, die auch bei rauen Umgebungsbedingungen einsetzbar sind.

Die zuvor hergeleitete und dargestellte Aufgabe ist zunächst bei dem Vortex-Durchflussmessgerät und bei dem Druckaufnehmer, von denen die vorliegende Erfindung ausgeht, dadurch gelöst, dass der Druckaufnehmer eine durch den Druck des Mediums auslenkbare Membrantasche aufweist und die Membrantasche die Messmembran mit der optischen Faser umgibt, so dass die Membrantasche die Messmembran vor dem Medium abschirmt und die Messmembran zusammen mit der Membrantasche ausgelenkt wird, dass die Membrantasche mit einem zwischen der Membrantasche und der Messmembran vermittelnden Medium gefüllt ist, wobei das vermittelnde Medium Pulver enthält und das vermittelnde Medium ein Sediment aus dem Pulver ist.

Wenn es heißt, dass "die Messmembran zusammen mit der Membrantasche ausgelenkt wird", dann ist damit gemeint, dass bei Beaufschlagung der Membrantasche mit einem Druck bzw. mit einem Differenzdruck die dadurch verursachte Auslenkung der Membrantasche auch eine Auslenkung der an sich ja für die Erfassung einer Auslenkung vorgesehenen Messmembran bewirkt. Die von der Membrantasche umgebene Messmembran steht demnach in mechanischem Wirkzusammenhang mit der Membrantasche. Dadurch, dass die Membrantasche die Messmembran umgibt, wird ein direkter Kontakt zwischen der Messmembran und der auf ihr angeordneten optischen Faser mit dem strömenden Medium verhindert, so dass das strömende Medium weder direkt mit der optischen Faser in Berührung kommen kann, noch in dem strömenden Medium mitgeführte Teilchen mit der optischen Faser in Berührung kommen können. Das erfindungsgemäße Vortex-Durchflussmessgerät bzw. der erfindungsgemäße Druckaufnehmer für ein solches Vortex-Durchflussmessgerät sind demnach auch für den Einsatz unter rauen Prozessbedingungen geeignet.

Erfindungsgemäß ist vorgesehen, dass die Membrantasche mit einem zwischen der Membrantasche und der Messmembran vermittelnde Medium gefüllt ist, so dass die Wandungen der Membrantasche praktisch geringfügig beabstandet sein können von der Messmembran und noch immer der stets erforderliche mechanische Wirkzusammenhang zwischen der Membrantasche und der Messmembran hergestellt ist. Dies bewirkt und unterstützt ein direkteres Ansprechen von Druckschwankungen im Medium auf die Messmembran, wobei gleichzeitig Fertigungstoleranzen nicht mehr so deutlich ins Gewicht fallen wie bei Realisierungen ohne das vermittelnde Medium zwischen Membrantasche und Messmembran.

Als besonders vorteilhaft haben sich solche vermittelnden Medien erwiesen, die einer Auslenkung der Membrantasche aufgrund einer Druckbeaufschlagung nicht seitlich - also senkrecht zur Auslenkungsrichtung - ausweichen, so dass die Auslenkung der Membrantasche möglichst unmittelbar an die Messmembran weitergegeben wird und nicht durch Verdrängungseffekte beim vermittelnden Medium gedämpft wird. Viele Medien, die diese Bedingung erfüllen, versteifen leider auch die Anordnung der in der Membrantasche gehaltenen Messmembran, so dass die Empfindlichkeit des Druckaufnehmers leidet.

Erfindungsgemäß werden als vermittelnde Medien solche Medien verwendet, die Pulver enthalten oder gemäß einer bevorzugten Ausgestaltung gänzlich aus einem solchen Pulver bestehen. Es hat sich überraschenderweise herausgestellt, dass solche Pulver besonders vorteilhaft sind, deren Partikel eine möglichst einheitliche Partikelgröße aufweisen, deren Partikel also eine möglichst geringe Varianz in der Partikelgröße zeigen. Bevorzugt werden solche Pulver verwendet, die eine Partikelgröße im Bereich von 2 $\mu$m bis 8 $\mu$m aufweisen, die vorzugsweise eine Partikelgröße im Bereich von 4 $\mu$m bis 6 $\mu$m aufweisen, wobei besonders vorteilhaft Pulver mit einer Partikelgröße von im wesentlichen 5 $\mu$m sind.

Obwohl das zwischen der Membrantasche und der Messmembran vermittelnde Medium eine direkte Berührung zwischen der Membrantasche und der Messmembran gewollt überflüssig macht, sind die Wandungen der Membrantasche und die Messmembran bevorzugt unmittelbar benachbart zueinander angeordnet, damit die Konstruktion insgesamt eine hohe Empfindlichkeit aufweist. Dies macht deutlich, dass die Zwischenräume zwischen der Membrantasche und der Messmembran vorzugsweise nur äußerst gering sind, im Idealfall in ihrer Erstreckung von Membran zu Membran nur Bruchteile eines Millimeters aufweisen.

Erfindungsgemäß ist das vermittelnde Medium ein Sediment aus dem zuvor genannten Pulver, was natürlich voraussetzt, dass das Pulver in Form eines heterogenen Stoffgemisches in einer Flüssigkeit als Suspension vorgelegen hat und sich dann in der Membrantasche abgesetzt hat, und zwar zwischen Membrantasche und der Messmembran. Bei einer anderen Ausgestaltung der Erfindung wird das vermittelnde Medium auf trockenem Wege durch Absetzen des Pulvers in der Membrantasche erhalten.

Insgesamt wirkt es sich bei einem bevorzugten Ausführungsbeispiel des Vortex-Durchflussmessgeräts bzw. des Druckaufnehmers vorteilhaft aus, wenn das vermittelnde Medium durch Einschleudern des Pulvers in die Membrantasche verdichtet wird, wobei dies auch auf trockenem Wege geschehen kann, bevorzugt jedoch geschieht durch Einschleudern des in einer Suspension enthaltenen Pulvers. Es werden dadurch sehr dichte und direkt ansprechende vermittelnde Medien zwischen den Wandungen der Membrantasche und der Messmembran erhalten.

Bei einer weiteren bevorzugten Ausgestaltung der Erfindung wird ein für Druckschwankungen besonders empfindliches aber gleichwohl robustes Vortex-Durchflussmessgerät bzw. ein solcher Druckaufnehmer dadurch erzielt, dass die Membrantasche eine erste Taschenmembran und eine zweite Taschenmembran aufweist, die Membrantasche also aus membranartigen, dünnen Wandungen besteht, wobei die erste Taschenmembran und die zweite Taschenmembran über ein Gehäuse des Druckaufnehmers zu der Membrantasche miteinander verbunden sind. Die beiden Taschenmembranen können also quasi in das Gehäuse des Druckaufnehmers eingesetzt werden und bilden so den Hohlraum, in den die Messmembran eingesetzt ist. Im Montagezustand des Druckaufnehmers stehen sich die Innenseite der ersten Taschenmembran und die erste Seite der Messmembran gegenüber und stehen sich die Innenseite der zweiten Taschenmembran und die zweite Seite der Messmembran ebenfalls gegenüber, so dass die erste Taschenmembran und die zweite Taschenmembran sowie die Messmembran praktisch parallel zueinander ausgerichtet sind.

Bei einem weiteren Ausführungsbeispiel des erfindungsgemäßen Vortex-Durchflussmessgeräts bzw. des erfindungsgemäßen Druckaufnehmers ist auf der einen Seite der Messmembran eine erste optische Faser angeordnet und ist auf der anderen Seite der Messmembran eine zweite optische Faser angeordnet, wobei jede der beiden optischen Fasern beispielsweise einen Messpfad für eine interferometrische Auswertung realisieren, also beispielsweise für eine interferometrische Auswertung nach Michelson oder nach Mach-Zehnder. Durch Verlegen der optischen Fasern auf beiden Seiten der Messmembran können bei Auslenkung der Membran gegenläufige Effekte auf den beiden Seiten der Membran genutzt werden, Dehnung der einen optischen Faser auf der einen Seite der Messmembran, Stauchung der anderen optischen Faser auf der anderen Seite der Messmembran, was die Anordnung grundsätzlich empfindlicher macht, als wenn nur eine Faser auf einer Seite des Messmembran verwendet würde.

Bevorzugt werden die erste optische Faser und die zweite optische Faser unterschiedlich lang gewählt, so dass der Arbeitspunkt der Anordnung durch Variation der Wellenlänge des kohärenten Lichts eingestellt werden kann, insbesondere ein Einstellung des Nullpunktes bei unausgelenkter Messmembran möglich ist, bevorzugt sind die erste und die zweite optische Faser über unterschiedlich lange Bereiche mit der jeweiligen Seite der Messmembran verbunden.

Die eingangs aufgezeigte Aufgabe ist ferner durch ein Verfahren zur Herstellung des zuvor beschriebenen Druckaufnehmers mit einer Membrantasche gelöst, der ein vermittelndes Medium zwischen der Membrantasche und der Messmembran aufweist, wobei dieses vermittelnde Medium ein Pulver enthält Das erfindungsgemäße Verfahren zeichnet sich dadurch aus, dass das Pulver in einer Flüssigkeit suspendiert wird, insbesondere in Wasser, und die Suspension in die Membrantasche eingeschleudert wird. Der Druckaufnehmer wird dabei so ausgerichtet, dass die Fliehkraft in die Membrantasche gerichtet ist, so dass die Suspension die Membrantasche unter Einwirkung der Fliehkraft ausfüllt.

Als besonders vorteilhaft hat es sich herausgestellt, wenn die Suspension verhältnismäßig dünnflüssig ist, nämlich zu über 90 Masseprozent aus einem flüssigen Medium besteht, vorzugsweise sogar aus über 95 Masseprozent aus einem flüssigen Medium besteht Dann ist gewährleistet, dass die Partikel des Pulvers auch enge Bereiche des Hohlraums in der Membrantasche überwinden können, beispielsweise im Bereich der optischen Faser. Besonders gut geeignete Suspensionen bestehen zu dem beschriebenen Anteil aus Wasser und dem restlichen Anteil aus Magnesiumoxid-Pulver oder aus Aluminiumoxid-Pulver mit einer Partikelgröße von etwa 5 $\mu$m.

Das Einschleudern geschieht in einer vorteilhaften Ausgestaltung des Verfahrens derart, dass in der Membrantasche ein Überdruck gegenüber dem Umgebungsdruck von etwa einem Bar erzeugt wird, wobei das Einschleudern insbesondere so lange fortgesetzt wird, bis die Membrantasche mit sedimentiertem Pulver verfüllt ist. Hintergrund für diese Vorgehensweise ist die Überlegung, dass der Druckaufnehmer auch bei Umgebungsunterdruck - also relativ zum Druck in der Membrantasche - optimal funktionieren soll, ein solcher Unterdruck also nicht dazu führen darf, dass sich die Taschenmembranen von dem sedimentierten Pulver abheben. Unter normalen Einsatzbedingungen ist ein Unterdruck von mehr als einem Bar nicht möglich, so dass höhere Drücke beim Einschleudern nicht erforderlich sind, gleichwohl können auch höhere Drücke verwendet werden; es ist insgesamt darauf zu achten, dass der Druckaufnehmer insbesondere im Bereich der Membrantasche mechanisch nicht überlastet wird. Der Druck in der Membrantasche kann beim Einschleudern eingestellt werden durch Wahl der Umdrehungszahl und/oder der radialen Erstreckung der Flüssigkeitssäule über der Membrantasche. Für den Druck in der Membrantasche gilt beim Einschleudern

$$p_M = \int_{r_1}^{r_2} \omega^2 \cdot \rho \cdot r\ dr = \frac{\omega^2 \cdot \rho}{2}(r_2^2 - r_1^2),$$

wobei $r_1$ und $r_2$ die Grenzen der radialen Erstreckung der Flüssigkeitssäule über der Membrantasche sind, $\omega$ die Kreisfrequenz der Schleuderbewegung und $\rho$ die Dichte des Mediums.

Bei Verwendung der zuvor geschilderten wässrigen Suspension ist ein etwa dreiminütiges Einschleudern unter den angegebenen Druckverhältnissen ausreichend, damit sich das suspendierte Pulver kompakt in der Membrantasche absetzt. Durch den Sedinnentationsprozess ist zwar ein Großteil der Flüssigkeit aus der Membrantasche verdrängt worden, jedoch lässt sich das Verfahren noch weiter verbessern, indem der Druckaufnehmer mit dem eingeschleuderten und sedimentierten Pulver einer Wärmebehandlung zur Verdampfung der restlichen Flüssigkeit unterzogen wird, wobei sich im Zusammenhang mit den zuvor beschriebenen detaillierten Parametern eine mehrstündige Erhitzung auf 60 °C bis zu 80 °C bewährt hat

Im Einzelnen gibt es nun eine Vielzahl von Möglichkeiten, das erfindungsgemäße Vortex-Durchflussmessgerät und den erfindungsgemäßen Druckaufnehmer auszugestalten und weiterzubilden. Dazu wird verwiesen einerseits auf die den Patentansprüchen 1 und 10 nachgeordneten Patentansprüche, andererseits auf die folgende Beschreibung von Ausführungsbeispielen in Verbindung mit der Zeichnung. In der Zeichnung zeigen

Fig. 1    eine schematische Übersichtsdarstellung eines aus dem Stand der Technik bekannten Vortex-Durchflussmessgeräts mit Druckaufnehmer, teilweise in Schnittdarstellung,

Fig. 2    ein Ausführungsbeispiel eines erfindungsgemäßen Druckaufnehmers in perspektivischer Darstellung,

Fig. 3    eine perspektivische Darstellung des in Fig. 2 dargestellten Druckaufnehmers in Teilschnitt,

Fig. 4    den Druckaufnehmer gemäß Fig. 3 mit ungeschnittener Messmembran und mit vermittelndem Medium und

Fig. 5    eine Messmembran mit auf ihr angeordneten und befestigten optischen Fasern.

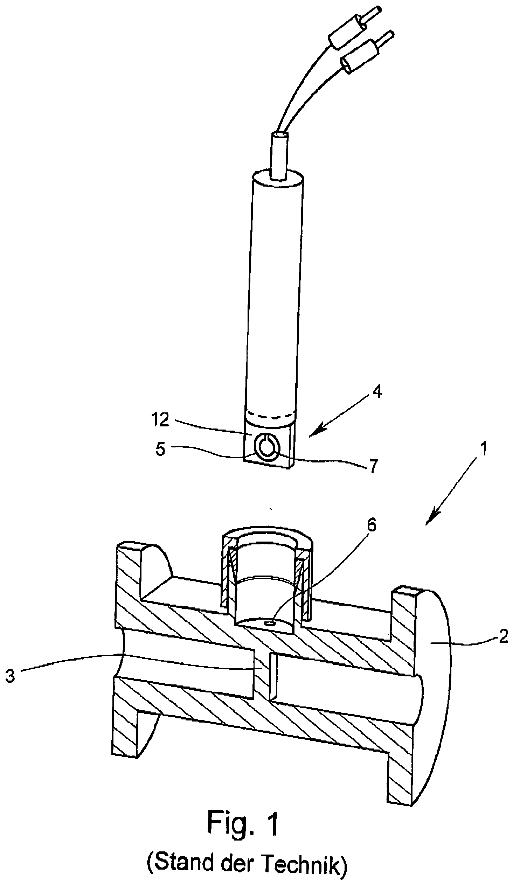

In Fig. 1 ist in einer Schnittdarstellung schematisch ein Vortex-Durchflussmessgerät 1 dargestellt mit einem Messrohr 2, das von einem nicht weiter dargestellten Medium durchströmbar ist und in der Anwendung von einem solchen Medium durchströmt wird. In dem Messrohr 2 ist ein Staukörper 3 vorgesehen, der von dem Medium angeströmt wird und durch den stromabwärts Wirbel in dem Medium erzeugt werden, die sich vom Staukörper stromabwärts ablösen und mit dem strömenden Medium davongetragen werden und eine Wirbelstraße ausbilden. Die Frequenz, mit der sich Wirbel ablösen, ist ein Maß für die Strömungsgeschwindigkeit innerhalb des Messrohres 2.

Im Wirkbereich des Staukörpers 3 ist ferner ein Druckaufnehmer 4 vorgesehen, wobei der Druckaufnehmer 4 eine auslenkbare Messmembran 5 aufweist und die Auslenkung der Messmembran 5 messtechnisch zur Detektion des Drucks in dem der Messmembran 5 benachbarten Medium herangezogen werden kann. Wenn davon die Rede ist, dass "im Wirkbereich des Staukörpers 3" ein Druckaufnehmer 4 vorgesehen ist, dann ist damit gemeint, dass der Druckaufnehmer 4 - durch welche konstruktiven Maßnahmen auch immerso angeordnet ist, dass er die von dem Staukörper 3 hervorgerufenen Wirbel und die durch diese Wirbel hervorgerufenen Druckschwankungen erfassen kann. Dazu kann der Druckaufnehmer tatsächlich stromabwärts hinter dem Staukörper angeordnet sein, der Druckaufnehmer 4 kann aber auch, wie in Fig. 1 dargestellt, im Wesentlichen oberhalb des Staukörpers 3 angeordnet sein, wobei die durch die Wirbel hervorgerufenen Druckschwankungen durch in dem Messrohr 2 vorgesehene Kanäle 6 zu der Messmembran 5 gelangen.

Gemeinsam ist den in allen Figuren dargestellten Ausführungsbeispielen, das zur Erfassung der Auslenkung der Messmembran 5 eine optische Faser 7 auf der Messmembran 5 angeordnet ist, wobei die optische Faser 7 in ihrem Verlauf auf der Messmembran 5 zumindest Teilweise mit der Messmembran 5 wirksam verbunden ist, so dass eine durch den Mediumdruck hervorgerufene Auslenkung der Messmembran 5 in dem wirksam verbundenen Bereich 8 zu einer Streckung und/oder Stauchung der optischen Faser 7 führt.

In Fig. 1 ist ferner zu erkennen, dass bei dem aus dem Stand der Technik bekannten Vortex-Durchflussmessgerät 1 bzw, bei dem aus dem Stand der Technik bekannten Druckaufnehmer 4 die optische Faser 7 direkt auf die Messmembran 5 aufgesetzt ist und damit in direktem Kontakt mit dem Medium steht. Bei anderen Ausführungsbeispielen ist er Druckaufnehmer 4 nicht außerhalb des Messrohres 2 angeordnet, sondern direkt hinter dem Staukörper 3 im Mediumstrom, so dass hier eine Verletzung der optischen Faser 7 und/oder der Messmembran 5 droht.

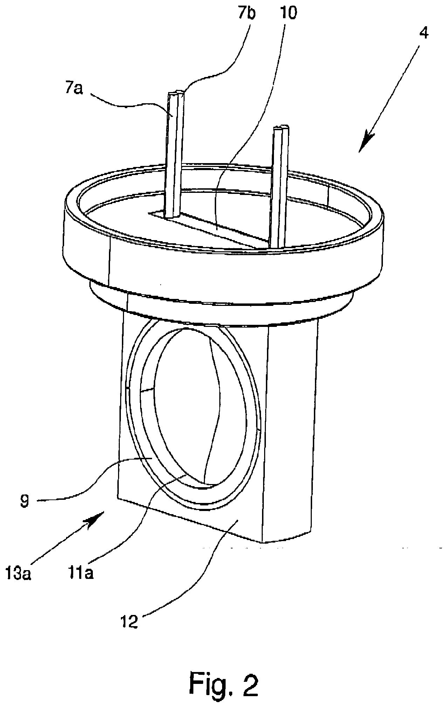

In den Figuren 2 bis 4 ist ein erfindungsgemäßer Druckaufnehmer 4 für ein erfindungsgemäßes Vortex-Durchflussmessgerät dargestellt, wobei die Figuren unterschiedliche Details des Druckaufnehmers 4 erkennen lassen.

Fig. 2 macht zunächst deutlich, dass die Messmembran als solche verdeckt ist, nämlich zusammen mit den dort vorgesehenen zwei optischen Fasern 7a, 7b umgeben ist von einer Membrantasche 9, die ebenfalls durch den Druck des Mediums auslenkbar ist. Die Membrantasche 9 schirmt die Messmembran 5 zusammen mit den optischen Fasern 7a, 7b von dem Medium ab. In den Fig. 2 bis 5 ist der Druckaufnehmer 4 bzw. die Messmembran 5 jeweils im druckbeaufschlagten Zustand dargestellt, in dem sowohl die Membrantasche 9 und mit der Membrantasche 9 auch die Messmembran 5 ausgelenkt sind; im nicht druckbeaufschlagten Zustand sind sowohl die Messmembran 5 als auch die Membrantasche 9 eben.

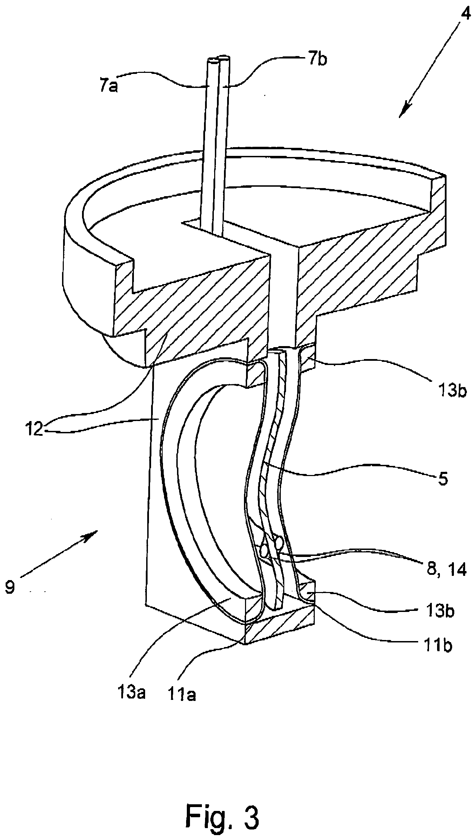

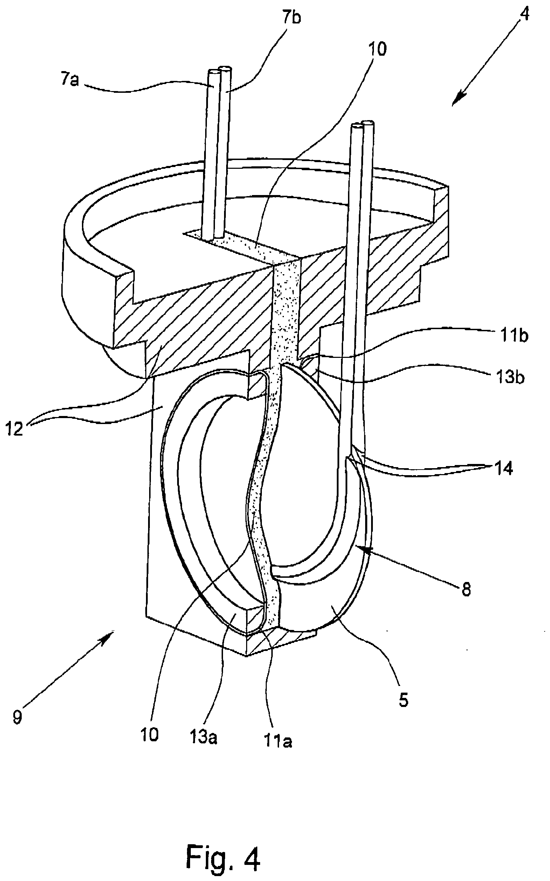

In den Fig. 3 und 4 wird deutlich, wie die Messmembran 5 in die Membrantasche 9 eingesetzt ist und von dieser schützend umgeben wird. Die optischen Fasern 7a, 7b ragen aus dem Druckaufnehmer 4 heraus und werden zu einer nicht im Einzelnen dargestellten interferometrischen Auswerteeinheit weitergeführt.

In den Fig. 2 und 4 ist zu erkennen, dass die Membrantasche 9 mit einem zwischen der Membrantasche 9 und der Messmembran 5 vermittelnden Medium 10 gefüllt ist, das eine großflächige, direkte Wechselwirkung zwischen der Membrantasche 9 und der Messmembran 5 ermöglicht. Das vermittelnde Medium 10 besteht nahezu vollständig aus Pulver, dessen Partikel eine Partikelgröße von im Wesentlichen 5 $\mu$m aufweisen mit nur geringen Abweichungen hin zu kleineren und größeren Partikeln. Es hat sich herausgestellt, dass Pulver mit einer möglichst einheitlichen Partikelgröße besonders gut fließfähig sind und Zwischenräume zwischen der Messmembran 5 und der Membrantasche 9 zuverlässig ausfüllen, insbesondere dann, wenn sie - wie in dem dargestellten Ausführungsbeispiel - zuvor in einer Flüssigkeit zu einer dünnflüssigen Suspension aufgeschlämmt worden sind und in die Membrantasche 9 eingeschleudert worden sind. Das so gewonnene vermittelnde Medium 10 ist damit praktisch ein Sediment, das eine feste, druck- und auslenkungsvermittelnde Konsistenz hat und bei einer Auslenkung der Membrantasche 9 nicht seitlich verdrängt wird, sondern die Auslenkung zuverlässig auf die Messmembran 5 überträgt.

In den Fig. 3 und 4 ist gut zu erkennen, dass die Membrantasche 9 gebildet wird durch eine erste dünne Taschenmembran 11a und eine zweite dünne Taschenmembran 11b, wobei die erste Taschenmembran 11a und die zweite Taschenmembran 11b über ein Gehäuse 12 des Druckaufnehmers 4 zu der Membrantasche 9 miteinander verbunden sind. Im zusammengefügten Zustand dieser verschiedenen Elemente der Membrantasche 9 stehen sich die Innenseite der ersten Taschenmembran 11a und die erste Seite der Messmembran 5 gegenüber und stehen sich die Innenseite der zweiten Taschenmembran 11b und die zweite Seite der Messmembran 5 ebenfalls gegenüber.

Die Taschenmembran 11a, 11b bestehen vorliegend aus Edelstahl, genauso wie das Gehäuse 12 des Druckaufnehmers 4, und haben eine Wandstärke von 50 $\mu$m. Die Wandstärken der Taschenmembranen 11a, 11b und der Messmembran 5 sind hier nicht maßstabsgerecht, sind vielmehr zur Verdeutlichung des Aufbaus stärker dargestellt; Entsprechendes gilt für die optischen Fasern 7a, 7b.

Die Taschenmembranen 11a, 11b sind über Ringelemente 13a, 13b in das Gehäuse 12 des Druckaufnehmers 4 eingepresst, wobei zur Erhöhung der Dichtigkeit auch noch der nach außen weisende Übergang zwischen den Ringelementen 12a, 12b, den Taschenmembranen 11a, 11b und dem Gehäuse 12 verschweißt werden können.

In anderen hier nicht dargestellten Ausführungsbeispielen, ist die Membrantasche 9 einstückig in und mit dem Gehäuse 12 des Druckaufnehmers 4 ausgebildet, indem der Hohlraum in der Membrantasche durch elektrochemische Korrosion oder Funkenerosion hergestellt ist.

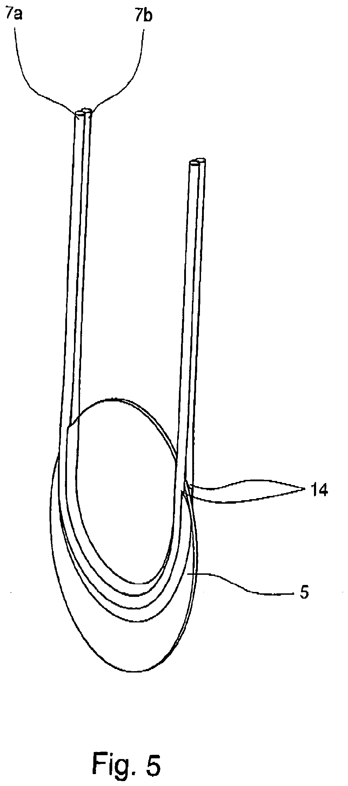

Die optischen Fasern 7a, 7b sind in dem Bereich, in dem sie mit der Messmembran 5 verbunden sind, metallisiert, im vorliegenden Fall mit Kupfer, wobei die Messmembran 5 ebenfalls aus Kupfer gefertigt ist und die Verbindung zwischen den optischen Fasern 7a, 7b und der Messmembran 5 jeweils durch eine Verlötung 14 hergestellt sind (Fig. 5),

Der in den Fig. 2 bis 4 dargestellte Druckaufnehmer ist hergestellt worden, indem eine Suspension aus 95 Masseprozent Wasser und 5 Masseprozent Aluminiumoxidpulver (Al$_2$O$_3$) mit einer Korngröße von etwa 5 $\mu$m hergestellt und in die Membrantasche 9 bei etwa einem Bar Überdruck über mehrere Minuten eingeschleudert worden ist, so dass sich ein kompaktes Sediment der Aluminiumoxid-Teilchen bilden konnte. Nachfolgend ist die Restfeuchte durch eine mehrstündige thermische Nachbehandlung des Druckaufnehmers 4 praktisch vollständig beseitigt worden.

**Patentansprüche**

1. Vortex-Durchflussmessgerät (1) mit einem von einem Medium durchströmbaren Messrohr (2), einem in dem Messrohr (2) vorgesehenen Staukörper (3) und einem im Wirkbereich des Staukörpers (3) vorgesehenen Druckaufnehmer (4), wobei der Druckaufnehmer (4) eine auslenkbare Messmembran (5) aufweist, und die Auslenkung der Messmembran (5) messtechnisch zur Detektion des Drucks in dem der Messmembran (5) benachbarten Medium herangezogen wird, wobei zur Erfassung der Auslenkung der Messmembran (5) wenigstens eine optische Faser (7) auf und/oder in der Messmembran (5) angeordnet ist, wobei die optische Faser (7) in ihrem Verlauf auf und/oder in der Messmembran (5) zumindest teilweise mit der Messmembran (5) wirksam verbunden ist, so dass eine durch den Mediumdruck hervorgerufene Auslenkung der Messmembran (5) in dem wirksam verbundenen Bereich (8) zu einer Streckung und/oder Stauchung der optischen Faser (7) führt,
**dadurch gekennzeichnet,**
**dass** der Druckaufnehmer (4) eine durch den Druck des Mediums auslenkbare Membrantasche (9) aufweist und die Membrantasche (9) die Messmembran (5) mit der optischen Faser (7) umgibt, so dass die Membrantasche (9) die Messmembran (5) vor dem Medium abschirmt und die Messmembran (5) zusammen mit der Membrantasche (9) ausgelenkt wird, dass die Membrantasche (9) mit einem zwischen der Membrantasche (9) und der Messmembran (5) vermittelnden Medium (10) gefüllt ist, wobei das vermittelnde Medium Pulver enthält und das vermittelnde Medium (10) ein Sediment aus dem Pulver ist.

2. Vortex-Durchflussmessgerät (1) nach Anspruch 1, **gekennzeichnet durch** Pulver mit einer Partikelgröße im Bereich von 2 $\mu$m bis 8 $\mu$m, bevorzugt Pulver mit einer Partikelgröße im Bereich von 4 $\mu$m bis 6 $\mu$m, besonders bevorzugt Pulver mit einer Partikelgröße von im Wesentlichen 5 $\mu$m.

3. Vortex-Durchflussmessgerät (1) nach Anspruch 1 oder 2, **dadurch gekennzeichnet, dass** das vermittelnde Medium (10) in Form des Sediments erhalten worden ist durch Einschleudern des Pulvers in die Membrantasche (9), insbesondere durch Einschleudern des in einer Suspension enthaltenen Pulvers.

4. Vortex-Durchflussmessgerät (1) nach einem der Ansprüche 1 bis 3, **dadurch gekennzeichnet, dass** die Membrantasche (9) eine erste Taschenmembran (11a) und eine zweite Taschenmembran (11b) aufweist, wobei die erste Taschenmembran (11a) und die zweite Taschenmembran (11b) über ein Gehäuse (12) des Druckaufnehmers (4) zu der Membrantasche (9) miteinander verbunden sind, wobei sich im Montagezustand des Druckaufnehmers (4) die Innenseite der ersten Taschenmembran (11a) und die erste Seite der Messmembran (5) gegenüberstehen und sich im Montagezustand des Druckaufnehmers die Innenseite der zweiten Taschenmembran (11b) und die zweite Seite der Messmembran (5) gegenüberstehen.

5. Vortex-Durchflussmessgerät (1) nach Anspruch 4, **dadurch gekennzeichnet, dass** die Taschenmembranen (11a, 11b) aus Edelstahl bestehen, die Taschenmembranen insbesondere eine Wandstärke von 40 μm bis 60μm aufweisen, bevorzugt eine Wandstärke von 50 μm aufweisen.

6. Vortex-Durchflussmessgerät (1) nach einem der Ansprüche 1 bis 5, **dadurch gekennzeichnet, dass** die optische Faser (7a, 7b) im Bereich der Messmembran (5) metallisiert ist, insbesondere mit dem Metall bzw. der Legierung metallisiert ist, aus der auch die Messmembran (5) besteht, insbesondere mit Kupfer, Bronze oder Edelstahl.

7. Vortex-Durchflussmessgerät (1) nach einem der Ansprüche 1 bis 6, **dadurch gekennzeichnet, dass** auf der einen Seite der Messmembran (5) eine erste optische Faser (7a) angeordnet ist, auf der anderen Seite der Messmembran (5) eine zweite optische Faser (7b) angeordnet ist, insbesondere wobei die erste optische Faser (7a) und die zweite optische Faser (7b) unterschiedlich lang sind, vorzugsweise über unterschiedliche lange Verbindungsbereiche mit der jeweiligen Seite der Messmembran verbunden sind.

8. Druckaufnehmer für ein Vortex-Durchflussmessgerät (1) mit einer auslenkbaren Messmembran (5), wobei die Auslenkung der Messmembran (5) messtechnisch zur Detektion des Drucks in dem der Messmembran (5) benachbarten Medium herangezogen wird, wobei zur Erfassung der Auslenkung der Messmembran (5) wenigstens eine optische Faser (7) auf und/oder in der Messmembran (5) angeordnet ist, wobei die optische Faser (7) in ihrem Verlauf auf und/oder in der Messmembran (5) zumindest teilweise mit der Messmembran (5) wirksam verbunden ist, so dass eine durch den Mediumdruck hervorgerufene Auslenkung der Messmembran (5) in dem wirksam verbundenen Bereich (8) zu einer Streckung und/oder Stauchung der optischen Faser (7) führt,
**gekennzeichnet durch,**
die Merkmale des Kennzeichnungsteils von Anspruch 1.

9. Druckaufnehmer nach Anspruch 8, **gekennzeichnet durch** die Merkmale des Kennzeichnungsteils wenigstens eines der Ansprüche 2 bis 7.

10. Verfahren zur Herstellung eines Druckaufnehmers (4) mit einer Membrantasche (9) nach Anspruch 8 oder 9,
**dadurch gekennzeichnet,**
**dass** das Pulver in einer Flüssigkeit suspendiert wird, insbesondere in Wasser, und die Suspension in die Membrantasche (9) eingeschleudert wird.

11. Verfahren nach Anspruch 10, **dadurch gekennzeichnet, dass** eine Suspension aus über 90 Masseprozent flüssigem Medium, vorzugsweise aus über 95 Masseprozent flüssigem Medium verwendet wird.

12. Verfahren nach Anspruch 10 oder 11, **dadurch gekennzeichnet, dass** das Einschleudern derart erfolgt, dass in der Membrantasche (9) ein Überdruck gegenüber dem Umgebungsdruck von etwa einem Bar erzeugt wird, wobei das Einschleudern insbesondere so lange fortgesetzt wird, bis die Membrantasche (9) mit sedimentiertem Pulver verfüllt ist.

13. Verfahren nach Anspruch 12, **dadurch gekennzeichnet, dass** der Druckaufnehmer (4) mit dem eingeschleuderten und sedimentierten Pulver einer Wärmebehandlung zur Verdampfung der Flüssigkeit unterzogen wird, insbesondere einer mehrstündigen Erhitzung auf 60°C bis 80°C.

**Claims**

1. Vortex flowmeter (1) having a measuring tube (2) that can have a medium flowing through it, a bluff body (3) provided in the measuring tube (2) and a pressure sensor (4) provided in the effective range of the bluff body (3), wherein the pressure sensor (4) has a deflectable measuring diaphragm and the deflection of the measuring diaphragm (5) is used for determining the pressure in the medium neighboring the measuring diaphragm (5), wherein at least one optical fiber (7) is arranged on and/or in the measuring diaphragm (5) for detecting the deflection of the measuring diaphragm (5), wherein the optical fiber (7) is at least partially effectively connected to the measuring diaphragm (5) in its course on and/or in the measuring diaphragm (5), so that a deflection of the measuring diaphragm (5) caused by the medium pressure in the effective connected area (8) leads to an extension and/or compression of the optical fiber (7) **characterized in that** the pressure sensor (4) has a diaphragm pocket (9) that can be deflected by the pressure of the medium and the diaphragm pocket (9) surrounds the measuring diaphragm (5) with the optical fiber (7), so that the diaphragm pocket (9) protects the measuring diaphragm (5) from the medium and the measuring diaphragm (5) is deflected together with the diaphragm pocket (9), that the diaphragm pocket (9) is filled with an intermediary medium (10) between the diaphragm pocket (9) and the measuring diaphragm (5), wherein the intermediary medium (10) contains powder and the intermediary medium (10) is a sediment of the powder.

2. Vortex flowmeter (1) according to claim 1, **characterized by** powder with a particle size in the range of 2 $\mu$m to 8 $\mu$m, preferably powder with a particle size in the range of 4 $\mu$m to 6 $\mu$m, more preferably powder with a particle size of essentially 5 $\mu$m.

3. Vortex flowmeter (1) according to claim 1 or 2, **characterized in that** the intermediary medium (10) is obtained in the form of the sediment by centrifuging the powder in the diaphragm pocket (9), in particular by centrifuging a suspension containing the powder.

4. Vortex flowmeter (1) according to any one of claims 1 to 3, **characterized in that** the diaphragm pocket (9) has a first diaphragm (11a) and a second diaphragm (11b), wherein the first diaphragm (11a) and the second diaphragm (11b) are connected to one another via a housing (12) of the pressure sensor (4) into the diaphragm pocket (9), wherein the inside of the first diaphragm (11a) and the first side of the measuring diaphragm (5) face each other in the assembled state of the pressure sensor (4) and the inside of the second diaphragm (11b) and the second side of the measuring diaphragm (5) face each other in the assembled state of the pressure sensor (4).

5. Vortex flowmeter (1) according to claim 4, **characterized in that** the diaphragms (11a, 11b) consist of stainless steel, the diaphragms having, in particular a wall thickness of 40 $\mu$m to 60 $\mu$m, preferably a wall thickness of 50 $\mu$m.

6. Vortex flowmeter (1) according to any one of claims 1 to 6, **characterized in that** the optical fiber (7a, 7b) is metallized in the area of the measuring diaphragm (5), in particular is metallized with the metal or the alloy of which the measuring diaphragm (5) also consists, in particular with copper, bronze or stainless steel.

7. Vortex flowmeter (1) according to any one of claims 1 to 6, **characterized in that** a first optical fiber (7a) is arranged on one side of the measuring diaphragm (5), a second optical fiber (7b) is arranged on the other side of the measuring diaphragm (5), in particular wherein the first optical fiber (7a) and the second optical fiber (7b) have different lengths, preferably are connected to each side of the measuring diaphragm with connecting sections of different lengths.

8. Pressure sensor for a vortex flowmeter (1) having a deflectable measuring diaphragm (5), wherein the deflection of the measuring diaphragm (5) is used for determining the pressure in the medium neighboring the measuring diaphragm (5), wherein at least one optical fiber (7) is arranged on and/or in the measuring diaphragm (5) for detecting the deflection of the measuring diaphragm (5), wherein the optical fiber (7) is at least partially effectively connected to the measuring diaphragm (5) in its course on and/or in the measuring diaphragm (5), so that a deflection of the measuring diaphragm (5) caused by the medium pressure in the effective connected area (8) leads to an extension and/or compression of the optical fiber (7) **characterized by** the features of the characterizing part of claim 1.

9. Pressure sensor according to claim 8, **characterized by** the features of the characterizing part of at least one of the claims 2 to 7.

10. Method for producing a pressure sensor (4) having a diaphragm pocket (9) according to claim 8 or 9, **characterized in that** the powder is suspended in a liquid, in particular in water, and the suspension is centrifuged in the diaphragm pocket (9).

11. Method according to claim 10, **characterized in that** a suspension of more than 90 percent by mass liquid medium is used, preferably of more than 95 percent by mass liquid medium.

12. Method according to claim 10 or 11, **characterized in that** the centrifuging occurs in such a manner that, compared to the pressure of the surroundings, a positive pressure of about one Bar is created in the diaphragm pocket (9), wherein centrifuging continues, in particular, until the diaphragm pocket (9) is filled with sediment powder.

13. Method according to claim 13, **characterized in that** the pressure sensor (4) with the centrifuged and sediment powder is subjected to a thermal treatment for evaporation of liquid, in particular heating for several hours at 60 °C to 80 °C.

**Revendications**

1. Appareil (1) de mesure de débit de vortex, présentant

   un tube de mesure (2) qui peut être traversé par un fluide,

   un corps de blocage (3) prévu dans le tube de mesure (2) et

   un enregistreur de pression (4) prévu dans la zone d'action du corps de blocage (3),

   l'enregistreur de pression (4) présentant une membrane de mesure (5) déformable et la déformation de la membrane de mesure (5) intervenant techniquement dans la mesure pour détecter la pression qui règne dans le fluide au voisinage de la membrane de mesure (5),

   au moins une fibre optique (7) étant disposée sur et/ou dans la membrane de mesure (5) pour saisir la déformation de la membrane de mesure (5),

   le parcours de la fibre optique (7) sur et/ou dans la membrane de mesure (5) étant relié fonctionnellement au moins partiellement à la membrane de mesure (5) de telle sorte qu'une déformation de la membrane de mesure (5) provoquée par la pression du fluide entraîne un étirement et/ou un écrasement de la fibre optique (7) dans la partie (8) reliée fonctionnellement, **caractérisé en ce que**

   l'enregistreur de pression (4) présente une poche (9) de membrane apte à être déformée par la pression du fluide et **en ce que** la poche (9) de membrane entoure la membrane de mesure (5) présentant la fibre optique (7) de telle sorte que la poche de membrane (9) protège la membrane de mesure (5) du fluide et que la membrane de mesure (5) soit déformée en même temps que la poche de membrane (9), **en ce que** la poche de membrane (9) est remplie d'un fluide de transmission (10) disposé entre la poche de membrane (9) et la membrane de mesure (5) et

   **en ce que** le fluide de transmission contient une poudre et le fluide de transmission (10) est un sédiment de poudre.

2. Appareil (1) de mesure de débit de vortex selon la revendication 1, **caractérisé par** une poudre dont les particules ont une taille comprise entre 2 μm et 8 μm, de préférence une poudre dont les particules ont une taille comprise dans la plage de 4 μm à 6 μm et de manière particulièrement préférable une poudre dont les particules ont une taille d'essentiellement 5 μm.

3. Appareil (1) de mesure de débit de vortex selon les revendications 1 ou 2, **caractérisé en ce que** le fluide de transmission (10) en forme de sédiment est obtenu par introduction de la poudre dans la poche de membrane (9) et en particulier par introduction de la poudre contenue dans une suspension.

4. Appareil (1) de mesure de débit de vortex selon l'une des revendications 1 à 3, **caractérisé en ce que** la poche de membrane (9) présente une première membrane de poche (11a) et une deuxième membrane de poche (11b), la première membrane de poche (11a) et la deuxième membrane de poche (11b) étant reliées l'une à l'autre par un boîtier (12) de l'enregistreur de pression (4) pour former la poche de membrane (9), le côté intérieur de la première membrane de poche (11a) et le premier côté de la membrane de mesure (5) se faisant face lorsque l'enregistreur de pression (4) est en position de montage et le côté intérieur de la deuxième membrane de poche (11b) et le deuxième côté de la membrane de mesure (5) se faisant face lorsque l'enregistreur de pression est en position de montage.

5. Appareil (1) de mesure de débit de vortex selon la revendication 4, **caractérisé en ce que** les membranes de poche (11a, 11b) sont réalisées en acier allié, les membranes de poche présentant en particulier une épaisseur de 40 μm à 60 μm et de préférence une épaisseur de 50 μm.

6. Appareil (1) de mesure de débit de vortex selon l'une des revendications 1 à 5, **caractérisé en ce que** la fibre optique (7a, 7b) est métallisée au niveau de la membrane de mesure (5), en particulier est métallisée avec un métal ou un alliage qui constitue également la membrane de mesure (5), et en particulier avec du cuivre, du bronze ou un acier allié.

7. Appareil (1) de mesure de débit de vortex selon l'une des revendications 1 à 6, **caractérisé en ce qu'**une première fibre optique (7a) est disposée sur l'un des côtés de la membrane de mesure (5), une deuxième fibre optique (7b) est disposée sur l'autre côté de la membrane de mesure (5), la première fibre optique (7a) et la deuxième fibre optique (7b) ayant des longueurs différentes et étant en particulier reliées au côté concerné de la membrane de mesure sur des parties de liaison de longueurs différentes.

8. Enregistreur de pression pour appareil (1) de mesure de débit de vortex présentant une membrane de mesure déformable (5), la déviation de la membrane de mesure (5) intervenant techniquement pour détecter la pression qui règne dans le fluide au voisinage de la membrane de mesure (5), au moins une fibre optique (7) étant disposée sur et/ou dans la membrane de mesure (5) pour détecter la déformation de la membrane de mesure (5),

   le parcours de la fibre optique (7) sur et/ou dans la membrane de mesure (5) étant relié fonctionnellement au moins partiellement à la membrane de mesure (5) de telle sorte qu'une déformation de la membrane de mesure (5) provoquée par la pression du fluide entraîne un étirement et/ou un écrasement de la fibre optique (7) dans la partie (8) reliée fonctionnellement, **caractérisé par** les caractéristiques de la partie caractérisante de la revendication 1.

9.  Enregistreur de pression selon la revendication 8, **caractérisé par** les caractéristiques de la partie caractérisante d'au moins l'une des revendications 2 à 7.

10.  Procédé de fabrication d'un enregistreur de pression (4) présentant une poche de membrane (9) selon les revendications 8 ou 9, **caractérisé en ce que** la poudre est mise en suspension dans un liquide en particulier dans l'eau et **en ce que** la suspension est introduite dans la poche de membrane (9).

11.  Procédé selon la revendication 10, **caractérisé en ce qu'**il utilise une suspension constituée de 90 pour cent en masse d'un fluide liquide et de préférence de plus de 95 pour cent en masse d'un fluide liquide.

12.  Procédé selon les revendications 10 ou 11, **caractérisé en ce que** l'introduction s'effectue en formant dans la poche de membrane (9) une surpression d'environ 1 bar par rapport à la pression ambiante, l'introduction étant poursuivie en particulier jusqu'à ce que la poche de membrane (9) soit remplie d'une poudre sédimentée.

13.  Procédé selon la revendication 12, **caractérisé en ce que** l'enregistreur de pression (4) dans lequel la poudre a été introduite et sédimentée subit un traitement thermique d'évaporation de liquide et en particulier un chauffage de plusieurs heures à une température comprise entre 60°C à 80°C.

Fig. 1

(Stand der Technik)

Fig. 2

Fig. 3

Fig. 4

7a    7b

14

5

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009039659 A1
- EP 0124145 A2
- US 4899046 A